# FASCICULE DE BREVET EUROPEEN

(11) **EP 0 682 277 B1**
(45) Date de publication et mention de la délivrance du brevet: **24.11.1999**
(21) Numéro de dépôt: 95401078.1
(22) Date de dépôt: 10.05.1995
(51) Int. Cl.: G02B 6/30

(54) **Dispositif de connexion de fibres optiques à des guides d'ondes formés dans un substrat**
Anordnung zur Verbindung von optischen Fasern und Wellenleitern, die auf einem Substrat angebracht sind
Interconnection device for optical fibres and for waveguides formed in a substrate

(30) Priorité: 10.05.1994 FR 9405743
(43) Date de publication de la demande: 15.11.1995
(73) Titulaire: RADIALL, 93116 Rosny-Sous-Bois (FR)
(72) Inventeur: Billet, Gilles, F-38500 Voiron (FR); Yin, Huan Ben, F-91540 Mennecy (FR)
(74) Mandataire: Leszczynski, André

(56) Documents cités:
- EP-A- 0 429 877
- EP-A- 0 466 134
- EP-A- 0 548 882
- FR-A- 2 696 841
- PATENT ABSTRACTS OF JAPAN vol. 12 no. 460 (P-795) ,5 Décembre 1988 & JP-A-63 183404 (NEC) 28 Juillet 1988,
- PATENT ABSTRACTS OF JAPAN vol. 13 no. 563 (P-975) ,14 Décembre 1989 & JP-A-01 234806 (SUMITOMO ELECTRIC) 20 Septembre 1989,

## Description

La présente invention concerne un dispositif de connexion de fibres optiques à des guides d'ondes en optique intégrée formés dans un substrat.

Avec l'apparition des composants en optique intégrée tels que notamment des coupleurs, des multiplexeurs ou des commutateurs, se pose le problème de la connexion de ces composants à des fibres optiques.

La principale difficulté consiste à positionner convenablement le substrat dans lequel sont formés les guides d'ondes, par rapport aux fibres dont les axes des faces terminales doivent coïncider avec la plus grande précision possible avec les axes des guides d'ondes du substrat.

On connaît déjà un procédé permettant de réaliser une telle connexion.

Ce procédé consiste à réaliser, dans l'épaisseur du substrat et dans le prolongement de chaque guide d'ondes, des rainures en V dans lesquelles viennent se loger les fibres optiques.

Ce procédé présente toutefois l'inconvénient important que la profondeur des rainures V est peu précise, ce qui peut se traduire par un mauvais alignement des axes des fibres par rapport aux axes des guides d'ondes. Un autre exemple peut être trouvé dans EP-0 466 134-A.

La présente invention est définie dans la revendication 1 et vise à fournir un dispositif permettant, de façon fiable et répétitive, de connecter une ou plusieurs fibres optiques à un ou plusieurs guides d'ondes en optique intégrée formés dans un substrat.

La présente invention a pour objet un dispositif de connexion d'au moins une fibre optique à au moins un guide d'ondes qui est formé dans un substrat, à une distance prédéterminée d'une des faces du substrat constituant un plan de référence, comportant un réceptacle apte à recevoir la partie terminale de la fibre optique et un support plan apte à recevoir le substrat appliqué contre ledit support-par son plan de référence, le réceptacle et le support étant agencés de telle sorte que l'axe du guide d'ondes et l'axe de la fibre optique se situent dans un même plan parallèle au plan de référence du substrat. Le dispositif comporte en outre une butée latérale amovible apte à venir se positionner contre le support et contre laquelle le substrat prend appui lorsqu'il est logé dans le support, ladite butée latérale étant dimensionnée de manière à caler le substrat dans une position dans laquelle l'axe du guide d'ondes coïncide avec celui de la fibre optique.

Dans un mode de réalisation particulier de l'invention, le réceptacle est constitué par une rainure en V gravée directement dans la face du support plan contre laquelle le plan de référence du substrat s'applique.

Dans le cas où l'on désire connecter plusieurs fibres optiques à plusieurs guides d'ondes parallèles, le dispositif selon l'invention comporte, dans un mode de réalisation préféré, un réceptacle muni d'une pluralité de rainures parallèles, chacune étant destinée à recevoir la partie terminale d'une fibre optique, lesdites fibres optiques ainsi immobilisées dans le réceptacle présentant entre elles le même espacement que les guides d'ondes parallèles formés dans le substrat.

Le dispositif selon l'invention permet d'aligner avec précision les fibres optiques avec les guides d'ondes formés dans le substrat du fait que le problème de l'alignement des fibres, selon la direction perpendiculaire au plan de référence du substrat, est dissocié du problème de l'alignement des fibres selon la direction parallèle au plan de référence du substrat.

En effet, la réalisation du réceptacle sur lequel viennent s'immobiliser les parties terminales des fibres peut être facilement effectuée avec une précision suffisante pour assurer, d'une part, que les axes des fibres immobilisées dans le réceptacle sont coplanaires, et d'autre part, que le plan contenant les axes des fibres se situe à une distance d1 prédéterminée du support plan.

Ainsi, dans la mesure où, par construction, on connaît précisément la distance d2 qui sépare l'axe des guides d'ondes du plan de référence du substrat, il suffit de faire en sorte que la distance dl soit égale à la distance d2 pour assurer la coplanéité des axes des fibres optiques et des axes des guides d'ondes.

Par ailleurs, conformément à l'invention, la butée latérale permet de positionner le substrat selon la seconde direction définie plus haut, qui est parallèle au plan de référence du substrat.

En utilisant un jeu de plusieurs butées de largeurs différentes, on peut, par essais successifs, déterminer quelle butée permet d'obtenir la meilleure transmission de signal optique entre les fibres optiques et les guides d'ondes.

Dans le but de mieux faire comprendre l'invention on va en décrire maintenant un mode de réalisation donné à titre d'exemple non limitatif en référence au dessin annexé dans lequel :

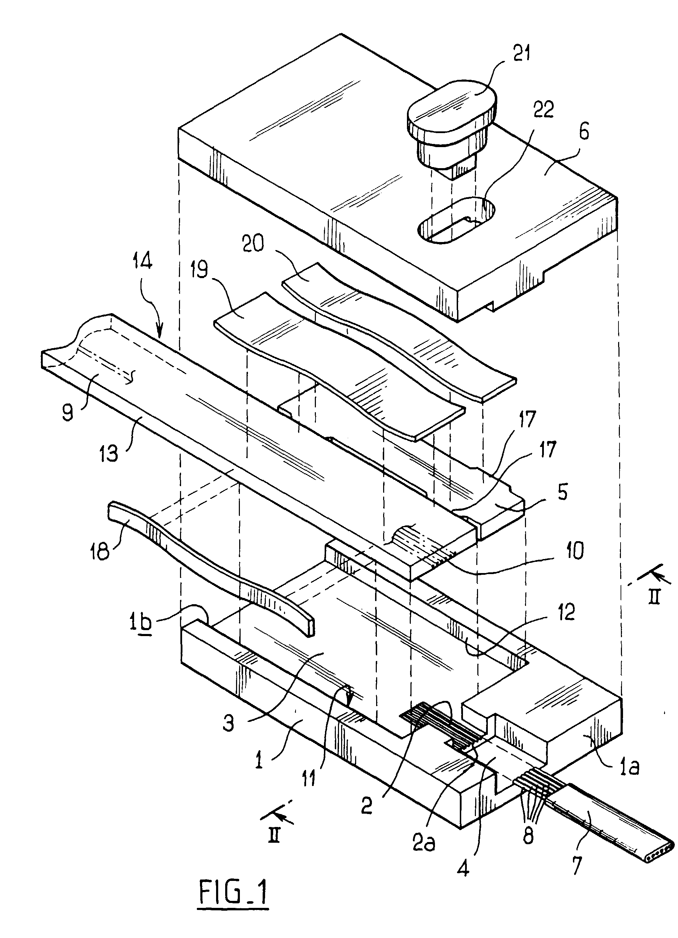

- La figure 1 est une vue en perspective éclatée d'un dispositif selon un premier mode de réalisation de l'invention.
- la figure 2 est une vue en coupe selon II-II de la figure 1,
- La figure 3 est une vue en coupe axiale d'un dispositif selon un second mode de réalisation de l'invention,
- La figure 4 est une vue en coupe analogue à la figure 3 d'un détail du dispositif de la figure 1,
- La figure 5 est une vue en coupe selon V-V de la figure 3, et
- La figure 6 est une vue en coupe selon VI-VI de la figure 3.

Le dispositif représenté comporte un socle 1 dans lequel sont définies une partie formant réceptacle 2 et une partie formant support 3 au sens de l'invention.

Ces deux parties 2, 3 sont directement issues de la fabrication du socle 1.

Une gorge 4 alignée avec le réceptacle 2 débouche dans la face avant 1a du socle, tandis que le support 3 débouche dans la face arrière 1b du socle.

Conformément à l'invention, une butée latérale 5, qui se présente ici sous la forme d'une cale de précision, est apte à venir se positionner sur le support 3.

Le dispositif comporte également un capot de fermeture 6.

La gorge 4 est prévue pour recevoir la partie terminale d'un faisceau gainé plat 7 de fibres optiques parallèles 8.

Pour connecter ces fibres optiques 8 aux guides d'ondes 10 d'un substrat 9, on dénude la partie terminale des fibres 8 et l'on dispose chacune de ces parties terminales dans l'une des rainures en V, 2a, de la partie formant réceptacle 2 du socle 1.

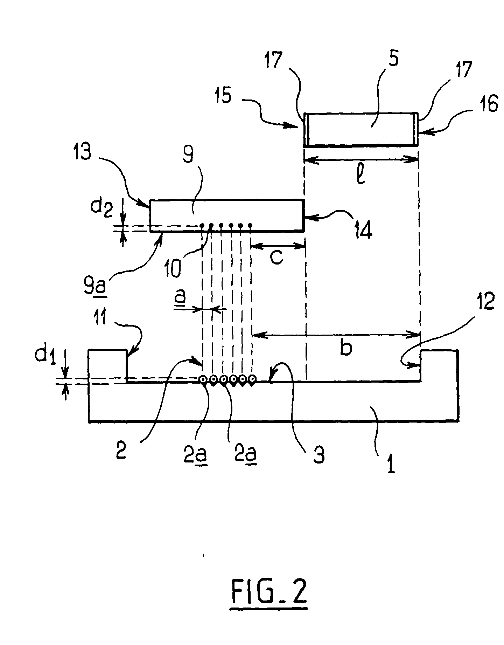

Conformément à un mode de réalisation particulier de l'invention, les rainures en V, 2a, sont gravées directement dans la face du support 3, de telle sorte que les axes des fibres optiques 8 logées dans lesdites rainures en V sont coplanaires et que le plan contenant ces axes se trouve à une distance d1 prédéterminée du support plan 3, comme on le voit sur la figure 2.

Dans l'exemple représenté, l'écartement des rainures en V, 2a, est tel que la distance a qui sépare les axes des fibres 8 est constante et égale à celle qui sépare les axes des guides d'ondes 10 du substrat 9.

Par construction, la distance d2 qui sépare les axes coplanaires des guides d'ondes 10 du plan de référence 9a du support 9, est connue avec précision.

Par conséquent, en réalisant les rainures en V, 2a, de telle sorte que la distance d1 soit égale à la distance d2, on s'affranchit du problème de la coplanéité des axes des fibres optiques 8 et des axes des guides d'ondes 10, et ce, sans avoir à intercaler de pièce intermédiaire entre le substrat 9 et le support plan 3.

Dans le mode de réalisation représenté, le support 3 est limité latéralement par deux bords plans parallèles 11, 12.

Le substrat 9 étant parallélépipédique, il comporte également deux faces latérales planes parallèles 13, 14.

La cale de précision 5 présente aussi une forme générale parallélépipédique.

Sur ses deux faces latérales 15 et 16, la cale de précision 5 présente des surépaisseurs 17, lesquelles sont ajustées par un usinage fin pour fixer la largeur hors tout de la cale 15 à une valeur prédéterminée 1.

Par construction, on connaît avec précision la distance c qui sépare la face latérale 14 du substrat de l'axe du guide d'ondes 10 le plus proche de cette face latérale 14.

Par construction du socle 1, on connaît également avec précision la distance b qui sépare le bord 12 du support 3 de l'axe de la fibre 8 la plus proche du bord 12.

Connaissant les distances b et c, il suffit d'usiner la cale de précision 5 pour lui donner une largeur hors tout l = b - c pour assurer l'alignement des axes des fibres optiques 8 avec les axes des guides d'ondes 10.

On peut en outre prévoir un jeu de plusieurs cales d'épaisseur 5 de largeurs différentes, de manière à pouvoir interchanger les cales jusqu'à obtenir la meilleure qualité de transmission du signal optique entre les fibres optiques 8 et le substrat 9.

Une lame-ressort 18 est intercalée entre la face latérale 13 du substrat 9 et le bord 11 du support 3 pour repousser le substrat 9 contre la cale de précision 5, laquelle prend appui sur le bord 12.

Pour immobiliser le substrat 9 et la cale 5, deux autres lames- ressort 19 et 20 sont également intercalées entre le substrat 9 et le capot de fermeture 6 d'une part, et entre la cale de précision 5 et le capot de fermeture 6 d'autre part.

Une fois refermé, le capot de fermeture 6 peut être solidarisé au socle 1 par collage.

Les parties terminales des fibres optiques 8 peuvent être immobilisées dans les rainures en V, 2a, du réceptacle 2 à l'aide d'un patin en élastomère 21 qui vient se loger dans un passage traversant 22 du capot de fermeture 6 situé au droit du réceptacle 2.

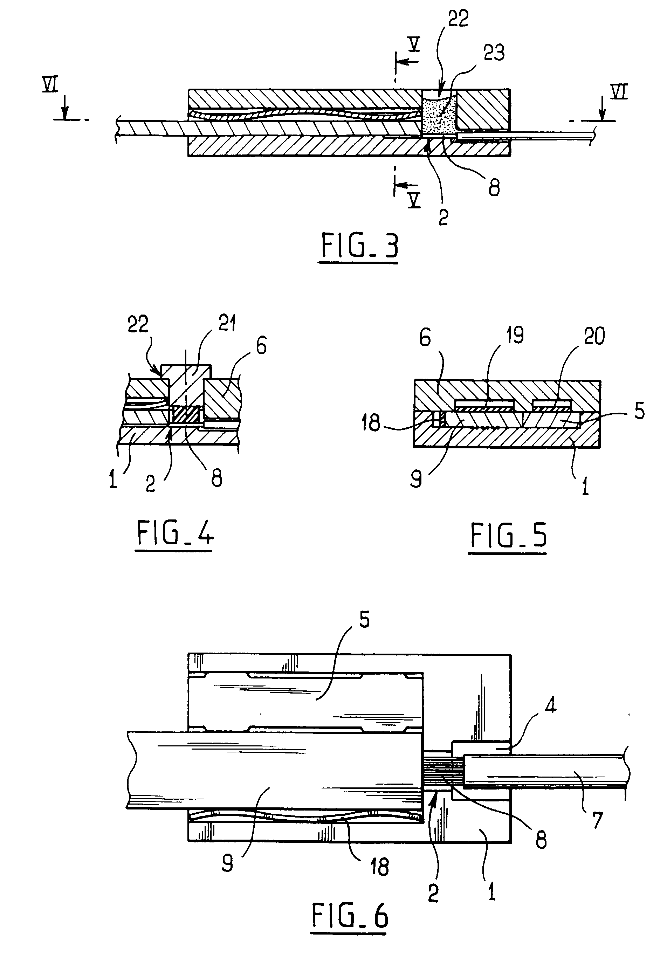

La vue en coupe de la figure 4 représente le patin en élastomère 21 engagé dans l'orifice 22 du capot de fermeture 6, qui exerce une pression sur les fibres 8 pour les immobiliser dans le réceptacle 2 du socle 1.

La figure 3 représente un second mode de réalisation de l'invention dans lequel la partie terminale des fibres 8 est immobilisée sur le réceptacle 2 à l'aide d'une colle 23 qui est mise en place dans le passage traversant 22 après fermeture du capot 6.

Il est bien entendu que les modes de réalisation qui viennent d'être décrits ne présentent aucun caractère limitatif, et qu'ils pourront recevoir toutes modifications désirables sans sortir pour cela du cadre de l'invention.

## Revendications

1. Dispositif de connexion d'au moins une fibre optique à au moins un guide d'ondes en optique intégrée qui est formé dans un substrat à une distance prédéterminée d'une des faces du substrat constituant un plan de référence. comportant un réceptacle (2) apte à recevoir la partie terminale de la fibre optique (8) et un support plan (3) apte à recevoir le substrat (9) appliqué contre ledit support (3) par son plan de référence (9a), le réceptacle (2) et le support (3) étant agencés de telle sorte que l'axe du guide d'ondes (10) et l'axe de la fibre optique (8) se situent dans un même plan parallèle au plan de référence (9a) du substrat (9), le substrat (9) prenant appui, lorsqu'il est logé dans le support (3), contre une butée latérale dimensionnée de manière à caler le substrat (9) dans une position dans laquelle l'axe du guide d'onde (10) coïncide avec celui de la fibre optique (8), caractérisé par le fait que ladite butée latérale est amovible et apte à venir se positionner contre un bord (12) limitant latéralement le support (3) pour servir d'appui au substrat (9).

2. Dispositif selon la revendication 1, caractérisé par le fait que le réceptacle est constitué par une rainure en V (2a) gravée directement dans la face du support plan (3) contre laquelle le plan de référence (9a) du substrat (9) s'applique.

3. Dispositif selon l'une des revendications 1 et 2 pour la connexion de plusieurs fibres optiques (8) à plusieurs guides d'ondes parallèles (10). caractérisé par le fait que le réceptacle (2) est muni d'une pluralité de rainures parallèles (2a) chacune étant destinée à recevoir la partie terminale d'une fibre optique (8), lesdites fibres optiques (8) ainsi immobilisées dans le réceptacle (2) présentant entre elles le même espacement que les guides d'ondes (10) parallèles formés dans le substrat (9).

4. Dispositif selon l'une quelconque des revendications 1 à 3. caractérisé par le fait qu'il comporte un organe élastique (18) qui repousse le substrat (9) contre la butée latérale (5).

5. Dispositif selon l'une quelconque des revendications 1 à 4. caractérisé par le fait qu'il comporte un patin en élastomère (21) apte à venir s'appliquer sur les parties terminales de la ou des fibres (8) logées dans le réceptacle (2) en exerçant une pression sur la ou lesdites fibres optiques (8).

6. Dispositif selon l'une quelconque des revendications 1 à 4, caractérisé par le fait qu'il comporte un volume vide (22) au-dessus des parties terminales de la ou des fibres optiques (8), apte à être rempli d'une colle (23) pour immobiliser la ou lesdites fibres optiques (8) dans ledit réceptacle (2).

7. Dispositif selon l'une quelconque des revendications 1 à 6. caractérisé par le fait qu'il comporte un capot de fermeture (6) qui recouvre le support (3) et le réceptacle (2).

8. Dispositif selon la revendication 7, caractérisé par le fait qu'il comporte des organes élastiques (19,20) entre le capot de fermeture (6) d'une part et le substrat (9) et respectivement la butée latérale (5) d'autre part.

## Patentansprüche

1. Vorrichtung zur Verbindung mindestens einer optischen Faser mit mindestens einem Wellenleiter mit integrierter Optik, der in einem Substrat ausgebildet ist in einem vorgegebenen Abstand von einer, eine Referenzebene bildenden Oberfläche des Substrats, die eine Aufnahmeeinrichtung (2), welche geeignet ist für eine Aufnahme des Endbereichs der optischen Faser (8), und eine ebene Unterstützung (3) aufweist, die geeignet ist, das gegen diese Unterstützung (3) mit seiner Referenzebene (9a) gedrückte Substrat (9) aufzunehmen, wobei die Aufnahmeeinrichtung (2) und die Unterstützung (3) so angeordnet sind, daß die Achse des Wellenleiters (10) und die Achse der optischen Faser (8) sich in derselben, zur Referenzebene (9a) des Substrats (9) parallelen Ebene befinden, dabei kommt das Substrat (9), wenn es in die Unterstützung (3) eingebracht wird, in Anlage an einen seitlichen Anschlag, der so bemessen ist, daß das Substrat (9) in eine Position gebracht wird, in der die Achse des Wellenleiters zusammenfällt mit der Achse der optischen Faser (8), dadurch gekennzeichnet, daß dieser seitliche Anschlag beweglich ist und positionierbar ist gegen einen Rand (12), der seitlich die Unterstützung (3) begrenzt, um dem Substrat (9) als Anschlag zu dienen.

2. Vorrichtung nach Anspruch 1, dadurch gekennzeichnet, daß die Aufnahmeeinrichtung gebildet ist von einer V-förmigen Rinne (2a), die unmittelbar in die Fläche der ebenen Unterstützung (3) eingearbeitet ist und gegen die die Referenzebene (9a) des Substrats (9) zur Anlage kommt.

3. Vorrichtung nach Anspruch 1 oder 2 für die Verbindung mehrerer optischer Fasern (8) mit mehreren parallelen Wellenleitern (10), dadurch gekennzeichnet, daß die Aufnahmeeinrichtung (2) versehen ist mit einer Vielzahl von parallelen Rinnen (2a), von denen jede bestimmt ist für die Aufnahme des Endbereichs einer optischen Faser (8), dabei weisen diese so in der Aufnahmeeinrichtung (2) fixiertcn optischen Fasern (8) zwischen sich dieselben Abstände auf wie die zueinander parallelen Wellenleiter (10), die im Substrat (9) ausgebildet sind.

4. Vorrichtung nach einem der Ansprüche 1 bis 3, dadurch gekennzeichnet, daß sie ein elastisches Organ (18) aufweist, das das Substrat (9) gegen den seitlichen Anschlag (5) drückt.

5. Vorrichtung nach einem der Ansprüche 1 bis 4, dadurch gekennzeichnct, daß sie einen Schuh (21) aus einem Elastomeren aufweist, der geeignet ist, an den Endbereichen der Faser (8) oder der Fasern (8) zu Anlage zu kommen, die in der Aufnahmeeinrichtung (2) angeordnet sind und einen Druck auf die optische Faser (8) oder die optischen Fasern (8) auszuüben.

6. Vorrichtung nach einem der Ansprüche 1 bis 4, dadurch gekennzeichnet, daß sie einen Leerraum (22) oberhalb der Endbereiche der optischen Faser (8) oder der optischen Fasern (8) aufweist, der geeignet ist, von einem Klebstoff (23) angefüllt zu werden, um die optische Faser (8) oder die optischen Fasern (8) in der Aufnahmeeinrichtung (2) zu fixieren.

7. Vorrichtung nach einem der Ansprüche 1 bis 6, dadurch gekennzeichnet, daß sie einen Deckel (6) aufweist, der die Unterstützung (3) und die Aufnahmeeinrichtung (2) überdeckt.

8. Vorrichtung nach Anspruch 7, dadurch gekennzeichnet, daß sie elastische Mittel (19, 20) zwischen dem Deckel (6) einerseits und dem Substrat (9) und jeweils dem seitlichen Anschlag (5) anderseits aufweist.

## Claims

1. Device for connecting at least one optical fibre to at least one wave guide in integrated optics formed in a substrate at a predetermined distance from one face of the substrate constituting a reference plane, comprising a receptacle (2) able to receive the end of the optical fibre (8) and a support plane (3) able to receive the substrate (9) resting against the said support (3) with its reference plane (9a), the receptacle (2) and the support (3) being arranged such that the axis of the wave guide (10) and the axis of the optical fibre (8) lie in a same plane parallel to the reference plane (9a) of the substrate (9), the substrate (9) resting, when it is housed in the support (3), against a lateral stop dimensioned so as to wedge the substrate (9) in a position in which the axis of the wave guide (10) coincides with that of the optical fibre (8), characterised in that the said lateral stop is removable and able to be positioned against an edge (1c) laterally limiting the support (3) to serve as a rest for the substrate (9).

2. Device according to claim 1, characterised in that the receptacle consists of a V groove (2a) engraved directly in the face of the support plane (3) against which rests the reference plane (9a) of the substrate (9).

3. Device according to any of the claims 1 and 2 for the connection of several optical fibres (8) to several parallel wave guides (10), characterised in that the receptacle (2) is fitted with a plurality of parallel grooves (2a), each being designed to receive the end of an optical fibre (8), the said optical fibres (8) being immobilised in the receptacle (2) and having between them the same spacing as the wave guides (10) parallel formed in the substrate (9).

4. Device according to any of claims 1 to 3, characterised in that it comprises an elastic element (18) which pushes the substrate (9) against the lateral stop (5).

5. Device according to any of claims 1 to 4, characterised in that it comprises an elastomer runner (21) able to come to rest on the ends of the fibre or fibres (8) housed in the receptacle (2) while exerting a pressure on the said optical fibre or fibres (8).

6. Device according to any of claims 1 to 4, characterised in this it comprises an empty volume (22) above the ends of the optical fibre or fibres (8) able to be filled with an adhesive (23) to immobilise the optical fibre or fibres (8) in the said receptacle (2).

7. Device according to any of claims 1 to 6, characterised in that it comprises a closure cap (6) which covers the support (3) and the receptacle (2).

8. Device according to claim 7, characterised in that it comprises elastic elements (19, 20) between the closure cap (6) on one side and the substrate (9) and the lateral stop (5) respectively on the other.
